# EUROPÄISCHE PATENTANMELDUNG

(11) **EP 2 256 433 A2**
(43) Veröffentlichungstag der Anmeldung: **01.12.2010**
(21) Anmeldenummer: 10005410.5
(22) Anmeldetag: 25.05.2010
(51) Int. Cl.: F24J 2/52

(54) **Befestigungsvorrichtung für Solaranlagen**

(30) Priorität: 26.05.2009 DE 102009022746
(71) Anmelder: Kieselbach Solar GmbH, 59494 Soest (DE)
(72) Erfinder: Esken, Manfred, 59494 Soest (DE)
(74) Vertreter: Schweiger, Johannes

(57) **Zusammenfassung**

Befestigungsvorrichtung für Solaranlagen
- einem Trägerarm (1) zur Montage der Befestigungsvorrichtung,
- einem gegenüber dem Trägerarm (1) in mindestens einer Schwenkposition schwenkbar gelagerten Stützarm (9) und
- einem gegenüber dem Trägerarm (1) schwenkbar gelagerten Aufnahmearm (2), an welchem der Stützarm (9) über Verstellmittel verstellbar gelagert ist.

## Beschreibung

Die Erfindung betrifft eine Befestigungsvorrichtung gemäß Anspruch 1.

Für die Montage von Solarmodulen auf Flachdächern beziehungsweise flach geneigten Dächern und zur Einstellung eines optimalen Neigungswinkels der Solarmodule gegenüber dem Sonnenlicht sind verschiedenartige Befestigungsvorrichtungen bekannt.

Eine Art der Befestigung besteht darin, einen Stützarm rechtwinklig mit einem Trägerarm an einem Ende rechtwinklig zu verschrauben oder zu verschweißen. An den beiden anderen Enden des Trägerarms und des Stützarms ist ein Aufnahmearm fixiert, der je nach Länge des Trägerarms und des Stützarms sowie des Aufnahmearms eine bestimmte, festgelegte Winkellage einnimmt.

Auf Grund der exponierten Lage und des erheblichen Gewichts der Solarmodule ist eine extrem stabile und verwindungssteife Befestigungsvorrichtung notwendig.

Auf der anderen Seite ist es für die Verarbeitung der Befestigungsvorrichtung auf dem Dach und für den Transport der

Befestigungsvorrichtungen vom Herstellungsort zum Montageort wünschenswert, dass die Befestigungsvorrichtungen ein möglichst geringes Gewicht aufweisen, aber auch platzsparend transportierbar sind.

Die bekannten Befestigungsvorrichtungen gibt es daher für die verschiedenen Einsatzzwecke in verschiedenen vorgefertigten Ausführungen.

Es ist daher die Aufgabe der vorliegenden Erfindung, eine Befestigungsvorrichtung anzugeben, die einerseits leicht transportierbar und andererseits flexibel einsetzbar ist und ein möglichst geringes Gewicht aufweist.

Diese Aufgabe wird mit den Merkmalen des Anspruchs 1 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart und in beliebiger Kombination beanspruchbar sein.

Der Erfindung liegt der Gedanke zugrunde, eine Befestigungsvorrichtung mit einem zumindest am Aufnahmearm verstellbar gelagerten Stützarm vorzusehen. Der Stützarm und der Aufnahmearm sind gegenüber dem Trägerarm schwenkbar gelagert. Durch die Verstellbarkeit des Aufnahmearms gegenüber dem mit dem Dach verbundenen Trägerarm ist die erfindungsgemäße Befestigungsvorrichtung flexibel für verschiedene Dachneigungen beziehungsweise Neigungswinkel der Solarmodule einsetzbar. Die Lagerhaltungskosten sinken, da im Vergleich zum Stand der Technik nicht mehr eine Vielzahl verschiedener Befestigungsvorrichtungen bevorratet werden muss, sondern auf Grund der Flexibilität einige wenige Varianten der erfindungsgemäßen Befestigungsvorrichtungen ausreichen.

Gemäß einer bevorzugten Ausführungsform der Erfindung ist der Stützarm schwenkbar gegenüber dem Aufnahmearm gelagert, so dass gleichzeitig mit der Verschiebbarkeit ein leichtgängiges Verstellen des Aufnahmearms möglich ist.

Mit Vorteil ist weiterhin vorgesehen, dass die Verstellmittel Mittel zur gleitenden Führung, insbesondere einen am Stützarm befestigten, in einer korrespondierenden Gleitschiene des Aufnahmearms gleitend geführten Nutenstein, aufweisen. Durch diese Maßnahme wird die Verstellung der Befestigungsvorrichtung erheblich vereinfacht, wobei gleichzeitig eine sichere Lagerung des Aufnahmearms auf dem Stützarm ermöglicht wird. Darüber hinaus ist eine quasi stufenlose Verstellung des Aufnahmearms möglich.

In einer vorteilhaften Ausführungsform der Erfindung ist vorgesehen, dass die, vorzugsweise fixierbaren, Verstellmittel Fixierstufen zur Einstellung verschiedener Winkellagen der Befestigungsvorrichtung umfassen. Die Fixierstufen dienen der Stabilisierung der jeweiligen, der Fixierstufe zugeordneten Winkellage. Mit Vorteil können die einzelnen Winkellagen im Bereich der korrespondierenden Fixierstufe durch entsprechende Winkellagenkennzeichnungen entsprechend gekennzeichnet werden. Diese Maßnahme erleichtert den Aufbau bei der Montage erheblich, da auf zusätzliche Messgeräte wie einen Winkelmesser verzichtet werden kann. Durch die Fixierstufen wird eine gestufte Einstellung von Winkellagen verwirklicht.

Indem der Aufnahmearm als, insbesondere L-förmiges, Doppelhohlprofil ausgestaltet ist, kann der Aufnahmearm gleichzeitig die Gleitschiene, nämlich mit einem Schenkel des L-förmigen Doppelhohlprofils, und eine Aufnahmeschiene zur Aufnahme der Solarmodule, nämlich durch den anderen Schenkel, bilden.

Soweit an dem Trägerarm eine erste Schwenkposition für einen ersten Verstellbereich der Befestigungsvorrichtung und eine zweite Schwenkposition für einen zweiten Verstellbereich der Befestigungsvorrichtung vorgesehen sind, kann mit dem Verstellbereich ein wesentlich größerer Winkelbereich für die Winkellagen erreicht werden. Mit Vorteil sind im Bereich der ersten Schwenkposition und im Bereich der zweiten Schwenkposition Verstellbereichkennzeichnungen zur Kennzeichnung der mit dem Verstellbereich erreichbaren Winkellagen angebracht.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: eine Seitenansicht der erfindungsgemäßen Befestigungsvorrichtung in einer Winkellage von 25°,

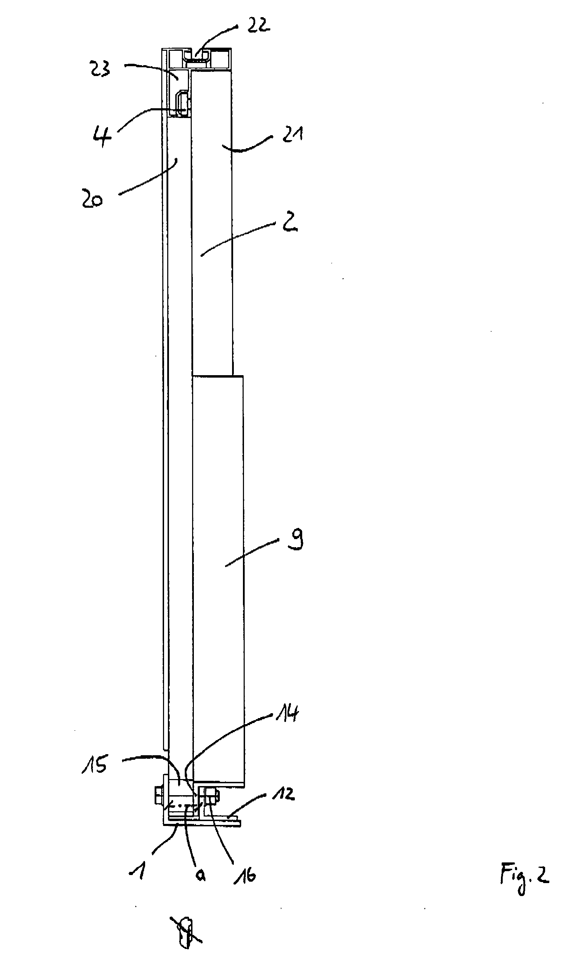

- Fig. 2:: eine Vorderansicht der erfindungsgemäßen Befestigungsvorrichtung in einer Winkellage gemäß Figur 1,
- Fig. 3:: eine perspektivische Ansicht der erfindungsgemäßen Befestigungsvorrichtung in zusammengeklapptem Zustand,
- Fig. 4a:: eine perspektivische Ansicht eines Nutensteins zur Verwendung mit der erfindungsgemäßen Befestigungsvorrichtung und
- Fig. 4b:: eine perspektivische Ansicht des Nutensteins gemäß Figur 4a von unten.

In den Figuren sind gleiche Bauteile und Bauteile mit der gleichen Funktion mit den gleichen Bezugszeichen gekennzeichnet,

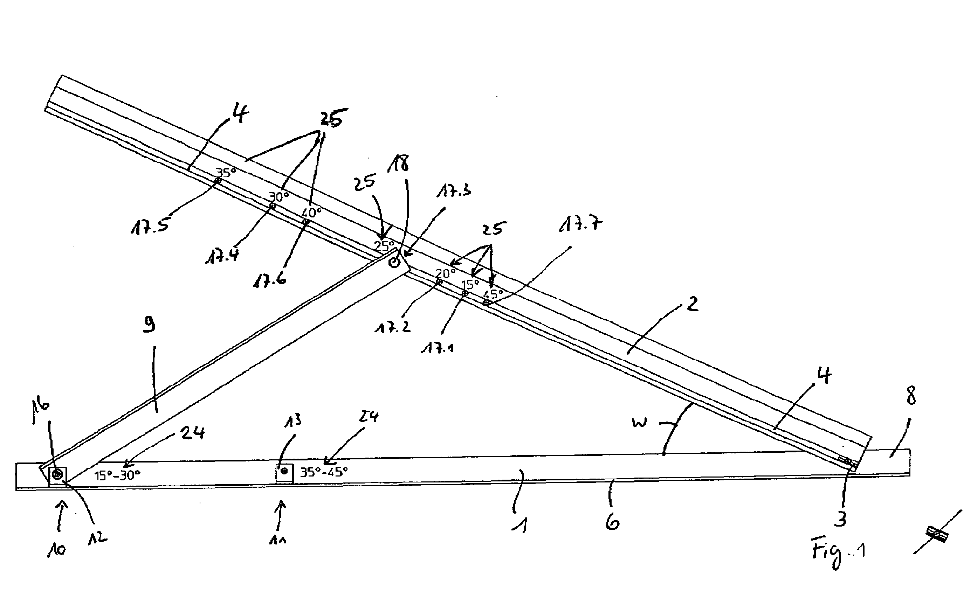

In Figur 1 ist eine erfindungsgemäße Befestigungsvorrichtung in einer Ausführungsform dargestellt, wobei die Befestigungsvorrichtung durch einen Trägerarm 1 auf einem Dach befestigbar ist, beispielsweise auf hier nicht dargestellten, mit dem Dach verbundenen Schienen oder einem entsprechenden Schienensystem, wie es im Stand der Technik bekannt ist.

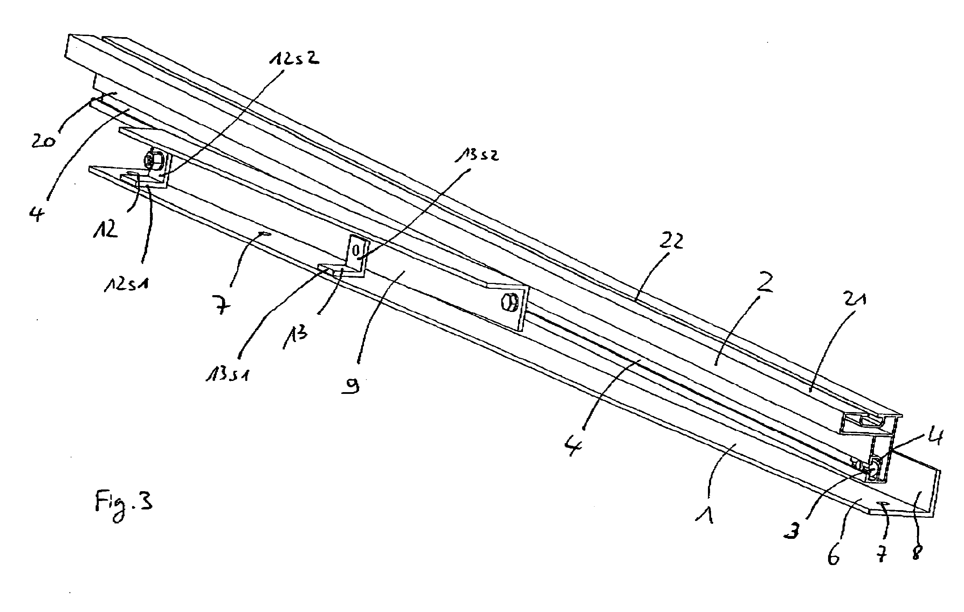

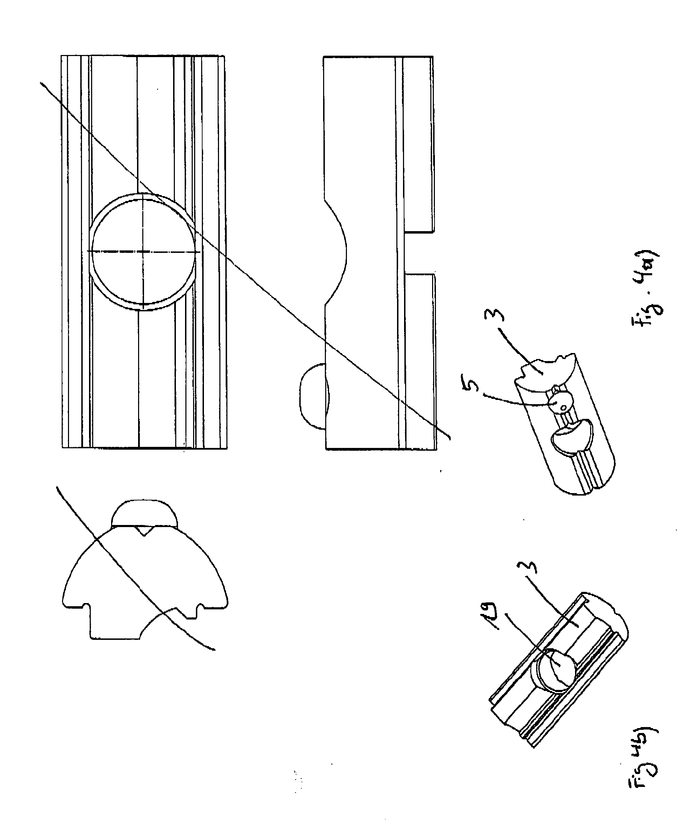

Auf der gegenüberliegenden Seite ist ein Solarmodul angewinkelt zu dem Trägerarm 1 auf einem Aufnahmearm 2 befestigbar, Der Aufnahmearm 2 ist an einem in Figur 1 rechts befindlichen rechten Ende des Trägerarms 1 schwenkbar festgelegt beziehungsweise festlegbar. Die Festlegung erfolgt durch einen Nutenstein 3, der in einer Gleitschiene 4 des Aufnahmearms 2 gleitend geführt ist. Die Funktion des Nutensteins 3 in der Gleitschiene 4 ist besonders gut in Figur 3 zu erkennen. Der Nutenstein 3 ist außerdem in den Figuren 4a und 4b als einzelnes Bauteil dargestellt. In Figur 4a ist eine Federung 5 des Nutensteins 3 dargestellt, mittels welcher der Nutenstein 3 in der Gleitschiene 4 federbeaufschlagt geführt wird. Dies bringt den Vorteil mit sich, dass der Nutenstein 3 ohne weitere Hilfsmittel in der für die Montage vorgesehenen Position vorfixiert gehalten wird und nicht verrutscht, während der Aufnahmearm 2 am Trägerarm 1 montiert wird.

Die Montage des Trägerarms 1 am Dach erfolgt durch in einem Befestigungsschenkel 6 des im Querschnitt L-förmigen Trägerarms 1 vorgesehene Befestigungslöcher 7. Der Aufnahmearm 2 ist dagegen an einem zu dem Befestigungsschenkel 6 orthogonalen Schenkel 8 schwenkbar fixiert, und zwar an einem in Figur 1 rechts befindlichen rechten Ende des Aufnahmearms 2.

Mit Abstand zu dem rechten Ende des Aufnahmearms 2 und zu dem rechten Ende des Trägerarms 1 ist der Aufnahmearm 2 durch einen sowohl am Aufnahmearm 2 als auch am Trägerarm 1 festlegbaren und schwenkbaren Stützarm 9 abstützbar.

Der Stützarm 9 kann in einer ersten Schwenkposition 10 für einen ersten Verstellbereich (hier 15° bis 30°) der Befestigungsvorrichtung und in einer zweiten Schwenkposition 11 für einen zweiten Verstellbereich (hier 35° bis 45°) der Befestigungsvorrichtung fixierbar ausgebildet sein.

Die Fixierung erfolgt in der ersten Schwenkposition 10 oder der zweiten Schwenkposition 11 durch L-förmige Winkel 12, 13. Die L-förmigen Winkel 12, 13 sind mit jeweils einem Schenkel 12s1, 13s1 an dem Befestigungsschenkel 6 des Trägerarms 1 fixiert, hier durch eine Schweißverbindung, Der jeweils andere Schenkel 12s2, 13s2 der Winkel 12, 13 ist orthogonal zum jeweiligen Schenkel 12s1, 13sl und damit parallel zu dem Schenkel 8 des Trägerarms 1.

Die Schenkel 12s2, 13s2 sind mit einem Abstand a zu dem Schenkel 8 angeordnet, um den Aufnahmearm 2 und einen Schenkel 14 des Stützarms 9 aufzunehmen, an welchem der L-förmige Stützarm 9 an den Winkeln 12, 13 festlegbar ist. Um den Abstand a bei der Festlegung des Stützarms 9 einzuhalten, ist eine Abstandshülse 15 an dem Stützarm 9 fixiert. Durch die Abstandshülse 15 hindurch erfolgt die Fixierung des Stützarms 9 an einem der Winkel 12, 13 in der ersten oder zweiten Schwenkposition 10, 11 durch geeignete Befestigungsmittel, hier eine Schraubverbindung 16.

Auf der gegenüberliegenden Seite des Stützarms 9 ist dieser an der Gleitschiene 4 festlegbar. Die Festlegung erfolgt über einen weiteren Nutenstein 3', der dem Nutenstein 3 gemäß Figuren 4a, 4b entspricht. Entlang der Gleitschiene 4 sind Fixierstufen 17.1, 17.2, 17.3, 17.4, 17.5, 17.6 und 17.7 gemäß nachstehender Tabelle vorgesehen:

| Bezugszeichen | Winkellage |
|---|---|
| 17.1 | 15° |
| 17.2 | 20° |
| 17.3 | 25° |
| 17.4 | 30° |
| 17.5 | 35° |
| 17.6 | 40° |
| 17.7 | 45° |

Die Winkellagen 17.1 bis 17.4 sind demnach der ersten Schwenkposition 10 zugeordnet, während die Winkellagen 17.5 bis 17.7 der zweiten Schwenkposition 11 zugeordnet sind.

Zur Fixierung des Nutensteins 3' in der entsprechenden Winkellage sind Fixiermittel 18, hier eine Schraubverbindung vorgesehen, wobei die Schraubverbindung durch eine Durchgangsöffnung 19 des Nutensteins 3' verläuft.

Für die Winkelbereiche der ersten Schwenkposition 10 und der zweiten Schenkposition 11 sind Kennzeichnungen 24 im Bereich der ersten Schwenkposition 10 beziehungsweise der zweiten Schenkposition 11 angebracht, damit die Handhabung der Befestigungsvorrichtung vereinfacht wird. Für die Winkellagen 17.1 bis 17.7 sind Winkellagenkennzeichnungen 25 jeweils im Bereich der korrespondierenden Winkellagen 17.1 bis 17.7 an dem Aufnahmearm 2 angebracht.

Der Aufnahmearm 2 ist als L-förmiges Doppelhohlprofil mit einem die Gleitschiene 4 aufnehmenden Gleitschienenschenkel 20 und einem das Solarmodul aufnehmenden Aufnahmeschenkel 21 mit einer Aufnahmeschiene 22 zur gleitenden Aufnahme und Fixierung der Solarmodule ausgebildet.

Der Gleitschienenschenkel 20 und der Aufnahmeschenkel 21 bilden das Doppelhohlprofil, wobei der Gleitschienenschenkel 20 und der Aufnahmeschenkel 21 eine gemeinsame Verbindungswand 23 aufweisen.

Die Gleitschiene 4 ist im Kantenbereich des Gleitschienenschenkeis 20, und zwar in dem in Richtung des Befestigungsschenkels 6 angeordneten Kantenbereich, angeordnet.

Bei der gezeigten Ausführungsform dienen als Verstellmittel die schwenkbaren Lagerungen des Aufnahmearms 2 und des Stützarms 9 an Trägerarm 1 und insbesondere die schwenkbare und gleitende Lagerung des Stützarms 9 in der Gleitschiene 4 mit der Fixierungsmöglichkeit durch die Fixierstufen 17.1 bis 17.7.

Im zusammengeklappten Zustand gemäß Figur 3 nimmt die Befestigungsvorrichtung insbesondere für den Transport deutlich weniger Platz ein als vergleichbare Befestigungsvorrichtungen aus dem Stand der Technik.

Durch (nicht dargestellte) U-förmige Ausnehmungen in dem Gleitschienenschenkel 20 im Bereich der ersten Schwenkposition 10 und der zweiten Schwenkposition 11 wäre ein noch weiteres zusammenklappen der Befestigungsvorrichtung möglich.

Die angegebenen Winkellagen 17.1 bis 17.7 beziehen sich auf einen Öffnungswinkel W zwischen dem Trägerarm 1 und dem Aufnahmearm 2.

### Befestigungsvorrichtung für Solaranlagen

### Bezugszeichenliste

- 1: Trägerarm
- 2: Aufnahmearm
- 3, 3': Nutenstein
- 4: Gleitschiene
- 5: Federung
- 6: Befestigungsschenkel
- 7: Befestigungslöcher
- 8: Schenkel
- 9: Stützarm
- 10: erste Schwenkposition
- 11: zweite Schwenkposition
- 12: Winkel
- 12s1: Schenkel
- 12s2: Schenkel
- 13: Winkel
- 13s1: Schenkel
- 13s2: Schenkel
- 14: Schenkel
- 15: Abstandshülse
- 16: Schraubverbindung
- 17.1: Fixierstufen
- 17.2: Fixierstufen
- 17.3: Fixierstufen
- 17.4: Fixierstufen
- 17.5: Fixierstufen
- 17.6: Fixierstufen
- 17.7: Fixierstufen
- 18: Fixiermittel
- 19: Durchgangsöffnung
- 20: Gleitschienenschenkel
- 21: Aufnahmeschenkel
- 22: Aufnahmeschiene
- 23: Verbindungswand
- 24: Kennzeichnungen
- 25: Winkellagenkennzeichnungen
- a: Abstand
- W: Öffnungswinkel

## Patentansprüche

1. Befestigungsvorrichtung für Solaranlagen mit
- einem Trägerarm (1) zur Montage der Befestigungsvorrichtung,
- einem gegenüber dem Trägerarm (1) in mindestens einer Schwenkposition schwenkbar gelagerten Stützarm (9) und
- einem gegenüber dem Trägerarm (1) schwenkbar gelagerten Aufnahmearm (2), an welchem der Stützarm (9) über Verstellmittel verstellbar gelagert ist.

2. Befestigungsvorrichtung nach Anspruch 1,
**dadurch gekennzeichnet,**
**dass** der Stützarm (9) schwenkbar gegenüber dem Aufnahmearm (2) gelagert ist.

3. Befestigungsvorrichtung nach einem der vorhergehenden Ansprüche,
**dadurch gekennzeichnet,**
**dass** die Verstellmittel Mittel zur gleitenden Führung, insbesondere einen am Stützarm (9) befestigten, in einer korrespondierenden Gleitschiene (4) des Aufnahmearms (2) gleitend geführten Nutenstein (3'), aufweisen.

4. Befestigungsvorrichtung nach einem der vorhergehenden Ansprüche,
**dadurch gekennzeichnet,**
**dass** die, vorzugsweise fixierbaren, Verstellmittel Fixierstufen (17.1, 17.2, 17.3, 17.4, 17.5, 17.6, 17.7) zur Einstellung verschiedener Winkellagen der Befestigungsvorrichtung umfassen.

5. Befestigungsvorrichtung nach einem der vorhergehenden Ansprüche,
**dadurch gekennzeichnet,**
**dass** der Aufnahmearm (2) als, insbesondere L-förmiges, Doppelhohlprofil ausgestaltet ist.

6. Befestigungsvorrichtung nach einem der vorhergehenden Ansprüche,
**dadurch gekennzeichnet,**
**dass** an dem Trägerarm (1) eine erste Schwenkposition (10) für einen ersten Verstellbereich der Befestigungsvorrichtung und eine zweite Schwenkposition (11) für einen zweiten Verstellbereich der Befestigungsvorrichtung vorgesehen ist.
